# FASCICULE DE BREVET EUROPEEN

(11) **EP 1 074 290 B1**
(45) Date de publication et mention de la délivrance du brevet: **01.08.2007**
(21) Numéro de dépôt: 00402197.8
(22) Date de dépôt: 01.08.2000
(51) Int. Cl.: B01D 53/94, B01D 53/86, C01B 25/45, C01B 25/37, B01J 20/02, B01J 29/00

(54) **Procédé pour l'adsorption et la désorption des oxydes d'azote dans des gaz d'échappement**
Verfahren zur Adsorption und Desorption von Stickoxiden in Abgasen
Process for the adsorption and desorption of nitrogen oxides in exhaust gases

(30) Priorité: 04.08.1999 FR 9910174
(43) Date de publication de la demande: 07.02.2001
(73) Titulaire: Institut Français du Pétrole, 92852 Rueil-Malmaison Cedex (FR)
(72) Inventeur: Becue, Thierry, 75006 Paris (FR); Mabilon, Gil, 78420 Carrière sur Seine (FR); Villeret, Philippe, 92500 Rueil-Malmaison (FR)

(56) Documents cités:
- EP-A- 0 202 710
- US-A- 4 180 551
- US-A- 5 200 378
- US-A- 5 234 884
- XIAO J ET AL: "SELECTIVE OXIDATION ON CHROMIA-PILLARED ZIRCONIUM PHOSPHATE AND PHENYLPHOSPHONATE" CATALYSIS LETTERS,CH,BALTZER, SCIENTIFIC PUBL, BASEL, vol. 57, no. 1/02, février 1999 (1999-02), pages 37-42, XP000803226 ISSN: 1011-372X
- PATENT ABSTRACTS OF JAPAN vol. 018, no. 542 (C-1261), 17 octobre 1994 (1994-10-17) & JP 06 191810 A (KYOCERA CORP), 12 juillet 1994 (1994-07-12)

## Description

### Domaine technique

La présente invention concerne un procédé avec des matériaux qui favorisent l'élimination par adsorption des oxydes d'azote (NO et NO₂, couramment appelés NOₓ) présents dans un mélange gazeux pouvant être sur-stoechiométrique en composés oxydants et plus particulièrement en oxygène, lesdits matériaux n'étant pas empoisonnés par les produits soufrés rencontrés dans ces gaz. L'invention s'applique à l'élimination des oxydes d'azotes (NOx) présents dans les gaz d'échappement de moteurs de véhicules automobiles et tout particulièrement de véhicules fonctionnant avec du diesel.

### Etat de la technique antérieure

La forte toxicité des oxydes d'azote, leur rôle dans la formation des pluies acides et de l'ozone troposphérique ont conduit à la mise en place de normes sévères limitant les rejets de ces composés. Pour satisfaire ces normes il est généralement nécessaire d'éliminer au moins une partie de ces oxydes présents dans les gaz d'échappement des moteurs automobiles ou stationnaires et des turbines.

L'élimination des oxydes d'azote par décomposition thermique ou de préférence catalytique est envisageable mais les hautes températures exigées par cette réaction sont incompatibles avec celles des gaz d'échappement. Seule la réduction catalytique des oxydes d'azote en azote est réalisable en utilisant les réducteurs présents, mais en faible quantité, dans le gaz d'échappement (CO, H₂, hydrocarbures imbrûlés ou dont la combustion a été imparfaite dans le moteur), et également en injectant, en amont du catalyseur, un complément de composés réducteurs. Ces agents de réduction sont des hydrocarbures, des alcools, des éthers ou autres composés oxygénés; ils peuvent être également le carburant liquide ou gazeux (sous pression "GNC" ou liquéfié "GPL") alimentant le moteur ou la turbine.

La demande de brevet EP 0 540 280 A1 décrit un dispositif pour réduire l'émission des oxydes d'azote dans les gaz d'échappement de moteurs à combustion interne, qui comprend un matériau pour l'adsorption et la désorption des oxydes d'azote. Selon ce procédé, les oxydes d'azote sont emmagasinés, au cours du fonctionnement en régime pauvre du moteur, c'est à dire pauvre en hydrocarbures, sous la forme de nitrates. Mais la capacité de stockage d'un piège fonctionnant selon ce principe est généralement détériorée par l'adsorption de produits soufrés, contenus dans les gaz d'échappement et qui forment des sulfates plus stables que les nitrates, empoisonnant le piège.

Par ailleurs, suite au piégeage des NOx, il est nécessaire de procéder à une étape de désorption des oxydes d'azote suivie de leur réduction. On connaît des dispositifs de traitement par oxydation catalysée du monoxyde de carbone CO et des hydrocarbures HC contenus dans les gaz d'échappement, faisant appel, par exemple à des catalyseurs de réduction des oxydes d'azote, appelés catalyseurs de NOx, qui sont actifs pour réaliser la réduction des NOₓ dans des plages de température comprises entre 200 et 350°C comprenant par exemple des métaux précieux sur des supports en oxyde, tels que du platine ou du palladium déposé sur un support en alumine, en oxyde de titane ou de zirconium, ou par des pérovskites ou à de s plages de température comprises entre 350 et 600°C comprenant par exemple des zéolithes hydrothermiquement stables (par exemple Cu-ZSM5). Un dispositif de traitement des gaz d'échappement d'un moteur à allumage par compression comportant un catalyseur et un absorbeur d'oxydes d'azote placés dans le collecteur d'échappement est décrit par exemple dans les brevets EP 0 540 280 A1 et EP 0 718 478 A1.

Il est donc nécessaire que le matériau se comportant comme un piège pour les oxydes d'azote soit capable d'adsorber les oxydes d'azote aux basses températures, jusqu'à la température nécessaire pour le fonctionnement du catalyseur de réduction des NOx, le piège assurant alors la désorption des oxydes d'azote qui viennent au contact du catalyseur DeNOx à une température suffisante pour assurer l'amorçage la réaction de la réduction des NOx.

Il a été décrit des oxydes présentant une structure cristallographique qui génère des canaux de taille suffisante pour accueillir des oxydes d'azote (brevet JP09075715A). Les solides utilisés dans ce brevet japonais sont des oxydes contenant des mélanges Al et Sn ou Zn et Sn, et présentant la structure cristallographique de la hollandite.

Dans le brevet FR2733924, il est aussi fait état d'un matériau de formule YBa₂Cu₃O₇₋ₓ qui permet d'intégrer les oxydes d'azote dans l'oxyde mixte composant le matériau. Ce brevet indique que le matériau, après avoir été chargé d'oxydes d'azote, se transforme en passant d'une structure orthorhombique riche en oxygène en une structure tétragonale pauvre en oxygène quand la teneur en oxygène du gaz diminue, et que cette transition de phase provoque la désorption des oxydes d'azote. Selon ce procédé, il est alors possible d'influencer l'adsorption et la désorption des oxydes d'azote en faisant varier les teneurs en oxygène des gaz d'échappement. Il a été récemment montré (K-Y. Lee, K. Watanabe, M. Misono, Applied Catalysis B 13, 241 (1997)) que l'adsorption de NO en présence d'oxygène sur ce matériau YBa₂Cu₃O₇₋ₓ conduit en fait à la formation d'espèces nitrates de baryum (Ba(NO₃)₂). Cette même étude montre aussi que ce matériau perd de façon dramatique ses propriétés d'adsorption des oxydes d'azote en présence de dioxyde de carbone par formation de carbonates de baryum. Les espèces de sulfates de baryum étant plus stables que les espèces nitrates, il est à craindre qu'un composé du type YBa₂Cu₃O₇₋ₓ s'empoisonne aussi en présence de dioxyde de soufre en formant des espèces sulfates sur les sites d'adsorption des oxydes d'azote.

Les publications [A. Clearfield and J. Stynes, J. Inorg. Nucl. Chem., 26 (1964) 117], [G. Alberti and E . torracca, J. Inorg. Nucl. Chem., 30 (1968) 317] décrivent des matériaux dont la structure est composée de trétraèdres de phosphate et contenant un élément de degré d'oxydation +4.

### Résumé de l'invention

L'invention concerne un procédé pour l'adsorption et la désorption des oxydes d'azote NO et NO₂, en particulier présents dans des gaz d'échappement, par exemple de moteurs à combustion interne de véhicules automobiles fonctionnant en milieu surstoechiométrique en oxydants, ledit procédé étant réalisé en présence de matériaux pouvant désorber les NOx par élévation de la température. Les matériaux ont une structure lamellaire et comprenent des tétraèdres de phosphate et au moins un élément A choisi parmi les éléments des groupes IVB, VB, VIB, VIIB et IVA de la classification périodique des éléments.

La demande de brevet EP-A- 0.202.710 décrit également un phosphate de zirconium de structure lamellaire laquelle a été modifiée par un traitement du phosphate de zirconium de type α, notamment à l'aide d'une substance organique aminée.

Il est également connu de la demande de brevet JP 06191810 un catalyseur pour la décomposition par réduction des oxydes d'azote, ledit catalyseur comprenant une phase cristallisée spécifique à base de phosphore, de zirconium et de cuivre. La préparation dudit catalyseur prévoit le mélange d'un précurseur de cuivre et d'un précurseur de zirconium puis l'introduction d'une source de phosphore.

### Intérêt de l'invention

Le matériau d'adsorption et de désorption selon l'invention permet de piéger les oxydes d'azote aux basses températures et de les désorber à la température à laquelle un catalyseur deNOx est capable de les réduire. Ces matériaux sont insensibles aux oxydes de soufre et de carbone contenus dans les gaz d'échappement, ce qui évite l'empoisonnement desdits matériaux. Les matériaux réalisent l'adsorption des oxydes d'azote dans une large gamme de température, alors que la désorption s'effectue dans une fenêtre de température très étroite permettant une gestion aisée de la régénération thermique. Lors de la désorption, les oxydes d'azote préalablement adsorbés sont émis par et au moins un élément (B) choisi dans le groupe constitué par les éléments alcalins, alcalino-terreux, les terres rares, les métaux de transition, les éléments des groupes IIIA, IVA de la classification périodique des éléments, ledit élément A étant intégré dans les sites octaédriques ménagés par la charpente phosphatée constituant les feuillets et ledit élément B se situant dans l'espace inter-feuillet dudit matériau lamellaire. bouffées de forte concentration en NOₓ, ce qui est bénéfique pour la cinétique de réaction de réduction des oxydes d'azote désorbés. La cinétique de réduction des NOₓ par des hydrocarbures est en effet d'ordre positif par rapport aux espèces oxydes d'azote. Le dit matériau ne présente pas de phase oxyde basique qui stabilise fortement les oxydes d'azote et les oxydes de soufre respectivement sous formes de nitrates et de sulfates. Les SOₓ qui peuvent être insérés avec les NOₓ dans la structure du matériau faisant l'objet de l'invention sont désorbés dans une gamme de température similaire à celle des NOₓ. L'empêchement de la formation de sulfates stables assure un empoisonnement moindre du matériau adsorbant, une fréquence de régénération et une température de régénération moins élevées, et donc une durée de vie accrue du piège à NOₓ.

### Exposé de l'invention

La présente invention concerne un procédé pour l'adsorption et la désorption des oxydes d'azote réalisé en présence d'un matériau dont la structure est composée de tétraèdres de phosphate et contenant au moins un élément (A) choisi parmi les éléments des groupes IVB, VB, VIB, VIIB et IVA de la classification périodique des éléments. De préférence cet élément (A) est au degré d'oxydation +4. Le phosphate présente une structure lamellaire dans laquelle les NOₓ peuvent s'insérer aux basses températures et en sortir à plus haute température.

La phase adsorbante selon l'invention a une structure lamellaire, est composée de tétraèdres de phosphates et comprend :
- au moins un élément (A) choisi dans le groupe constitué par les éléments des groupes IVB, VB, VIB,VIIB, IVA de la classification périodique des éléments,
- éventuellement au moins un élément (B) choisi dans le groupe constitué par les éléments alcalins IA, alcalino-terreux IIA, terres rares IIIB, ou métaux de transition de la classification périodique des éléments,
- éventuellement au moins un métal (C) choisi dans le groupe des métaux précieux de la famille du platine (groupe VIII).

De préférence, le matériau selon l'invention contient au moins un élément (B), et de préférence au moins un élément (C).

Les éléments (A) appartenant aux groupes IVB, VB, VIB,VIIB, IVA sont de préférence au degré d'oxydation +4 et sont intégrés dans les sites octaédriques ménagés par la charpente phosphatée constituant les feuillets. Les éléments (A) sont de préférence choisis parmi le zirconium, le titane, le germanium, ou l'étain ou le mélange d'au moins deux de ces éléments. De préférence on choisit le zirconium ou le titane.

Les éléments (B) appartiennent au groupe des éléments alcalins IA, alcalino-terreux IIA, terres rares IIIB, ou métaux de transition. Ils se situent dans l'espace inter feuillet du matériau lamellaire et servent à compenser au moins en partie la charge négative générée par la charpente phosphatée. De préférence on choisit un métal alcalin, par exemple le potassium ou le césium.

Les éléments (C) appartiennent au groupe formé par le platine, le palladium, le rhodium, le ruthénium, l'iridium, et l'osmium, de préférence on choisit le platine. Cette mise en oeuvre de l'invention comprenant au moins un élément (C) choisi parmi les métaux noble du groupe VIII permet d'oxyder NO en NO₂. Or la structure des matériaux utilisés dans le procédé de la présente invention est encore plus efficace pour l'insertion de la molécule de dioxyde d'azote (NO₂) que pour celle du monoxyde d'azote (NO). Ainsi la présence d'un élément (C) permet donc d'avoir un effet bénéfique sur la capacité d'adsorption des molécules d'oxydes d'azote contenues dans les gaz d'échappement.

La phase adsorbante utilisée selon l'invention a la composition massique, exprimée en pour cent masse par rapport à la masse totale de cette phase active calcinée à 1000°C pendant 4h, suivante :
- 20 à 80 % de phosphate, de préférence 30 à 70% et de manière encore plus préférée 30 à 60%, exprimé en PO₄,
- 5 à 40 %, de préférence 10 à 30% d'au moins un élément (A) appartenant aux groupes IVB, VB, VIB,VIIB, IVA de la classification périodique des éléments,
- éventuellement 1 à 55 %, de préférence 10 à 55% d'au moins un élément (B) appartenant au groupe des éléments alcalins, alcalino-terreux, terres rares, ou métaux de transition de la classification périodique des éléments,
- éventuellement 0,05 à 5 % d'au moins un métal (C) appartenant au groupe des métaux précieux de la famille du platine.

Les phases adsorbantes peuvent se présenter sous forme de poudre, de billes, de pastilles, d'extrudés, elles peuvent être également déposées ou directement préparées sur des supports monolithiques en céramique ou en métal. Avantageusement, en vue d'augmenter la surface spécifique des matériaux et donc d'augmenter leur capacité à adsorber les NOₓ, les matériaux peuvent être déposés sur des supports poreux de grande surface spécifique tels que de la silice ou de l'alumine (SiO₂, Al₂O₃, TiO₂, ZrO₂, SiC, MgO...) avant d'être mis en forme (extrusion, enduction...).

Le procédé de préparation du matériau de l'invention, comprend les étapes suivantes :
(a) On mélange une solution aqueuse d'un sel de l'élément (A) avec de l'acide phosphorique concentré, ou on décompose lentement des fluorocomplexes de l'élément (A) en présence d'acide phosphorique concentré, on chauffe à reflux pour cristalliser le complexe,
(b) On lave et on sèche de manière à obtenir un composé acide qui est lamellaire,
(c) On introduit éventuellement l'élément (B) en mettant en solution le composé de l'étape (b) dans une solution d'un sel de l'élément (B), pour échanger au moins en partie les protons du matériau synthétisé par des cations d'au moins un élément (B) et introduire ainsi l'élément (B) à l'état cationique dans la structure lamellaire du composé,
(d) On sèche et on calcine à au moins 400°C, l'élément (B) restant à l'état cationique,
(e) On ajoute éventuellement au moins un métal (C) selon l'une des étapes suivantes:
   - par imprégnation du composé de l'étape (d) par une solution d'un sel précurseur d'au moins un élément suivi d'une calcination, ou
   - par échange des protons du composé de l'étape (b), préalablement à l'échange par un cation d'un élément (B), avec un cation d'au moins un élément (C), suivi d'une calcination pour former de petits agrégats de métal précieux à la surface du composé et régénérer les protons ; le composé pouvant alors être soumis à un nouvel échange cationique des protons par un cation d'au moins un élément (B),
   - par mélange intime et mécanique du composé de l'étape (b) ou (d) avec une poudre composée d'un support sur lequel est déposé au moins un élément (C).
(f) On forme éventuellement des piliers dans la structure lamellaire selon l'une des étapes suivantes :
   - on insère directement un ou des complexes métalliques d'éléments appartenant aux groupes 13, 14 (IIIA, IVA), ou des métaux de transition dans les feuillets par chauffage prolongé en milieu acide, ou on intercale des molécules organiques polaires (alkyl-amines, alcools, acides aminés) qui sont ensuite échangées par le ou les complexes métalliques,
   - on calcine les espèces métalliques insérées afin de former des phases oxydes stables thermiquement. Les piliers formés sont soit des clusters de l'oxyde du ou des métaux introduits, soit des agrégats composés de solutions solides des oxydes des métaux introduits,
(g) Eventuellement on dépose le composé ou on synthétise directement le composé sur un support de grande surface spécifique, généralement un oxyde inorganique réfractaire.

Le procédé de préparation des matériaux utilisés dans le procédé selon la présente invention comprend de préférence l'étape (f) et comprend de préférence l'étape (g).

L'étape (f) est réalisée de manière à augmenter la surface spécifique du matériau qui est alors comprise entre 30 et 500 m² g⁻¹, de préférence entre 100 et 500 m² g⁻¹, de manière encore plus préférée entre 150 et 300 m² g⁻¹. De manière préférée, l'étape (f) est effectuée après l'étape (b) et avant l'étape (c). La masse des piliers oxyde peut représenter jusqu'à 80% de la masse sèche totale du matériau adsorbant.

L'oxyde inorganique réfractaire de l'étape (g) est généralement choisi dans le groupe constitué par les composés ci-après: l'alumine (alpha, bêta, delta, gamma, khi, ou l'alumine thêta), les silices, les silice-alumines, les zéolites, l'oxyde de titane, l'oxyde de zirconium, les carbures divisés, par exemple les carbures de silicium, simple ou mixtes. Des oxydes mixtes ou des solutions solides comprenant au moins deux des oxydes précités peuvent être ajoutés.

Cependant, pour l'utilisation sur véhicule, il est souvent préférable de mettre en oeuvre des supports rigides (monolithes) présentant une porosité ouverte importante (supérieure à 70%) afin de limiter les pertes de charge que pourraient engendrer les forts débits de gaz, et surtout les grandes vitesses spatiales des gaz d'échappement. En effet, ces pertes de charge pénalisent le bon fonctionnement du moteur et contribuent à abaisser le rendement d'un moteur à combustion interne (essence ou Diesel). Par ailleurs, la ligne d'échappement étant soumise à des vibrations ainsi qu'à des chocs mécaniques et thermiques importants, les catalyseurs en billes, en pastilles ou en extrudés risquent de subir des détériorations soit par attrition soit par fracturation.

Deux techniques sont mises en oeuvre pour préparer les catalyseurs de l'invention sur des supports (ou substrats) monolithique en céramique ou en métal.

La première comprend le dépôt direct sur le support monolithique, par la technique d'enduction connue de l'homme de l'art, de la phase adsorbante préparée selon le mode opératoire décrit ci-dessus (étapes unitaires (a), b), (d), éventuellement (c), (e), (f) et (g). La phase adsorbante peut aussi être enduite après la fin de l'étape (c) et l'étape (d) de calcination effectuée sur la phase déposée à même le monolithe.

La seconde technique comprend tout d'abord, le dépôt de l'oxyde inorganique sur le support monolithique puis la calcination du monolithe entre 500 et 1100°C de telle manière que la surface spécifique de cet oxyde soit comprise entre 20 et 150 m²g⁻¹, puis l'enduction du substrat monolithique recouvert par l'oxyde inorganique avec la phase adsorbante obtenue après les étapes unitaires b), (c), (d), (e), ou (f) décrites ci-dessus. Les étapes (d) et (e) peuvent être directement effectuées sur le monolithe après enduction du gel obtenu en (c) sur le substrat monolithique recouvert par l'oxyde réfractaire. De manière préférée, l'étape (f) est effectuée avant l'étape d'enduction.

Les supports monolithes qui peuvent être mis en oeuvre sont:
- soit en céramique, dont les éléments principaux peuvent être l'alumine, la zircone, la cordiérite, la mullite, la silice, les alumino-silicates ou la combinaison de plusieurs de ces composés,
- soit en carbure et/ou nitrure de silicium,
- soit en titanate d'aluminium
- soit en métal généralement obtenus à partir d'alliage de fer, chrome et aluminium dopés éventuellement par du nickel, du cobalt, du cérium ou de l'yttrium. Les plus connus ont comme appellation FECRALLOY^{R} ou KANTHAL^{R}.

Les supports céramiques ont une structure de type nid d'abeille ou se présentent sous forme de mousse ou de fibres.

Les supports métalliques peuvent être réalisés par l'enroulement de feuillards ondulés ou par l'empilement de feuilles métalliques également ondulées, constituant une structure en nid d'abeille à canaux droits ou à canaux en zigzag communiquant entre eux ou non. Ils peuvent être également réalisés à partir de fibres ou de fils métalliques enchevêtrés, tissés, tressés ou tricotés.

Pour les supports en métal renfermant de l'aluminium dans leur composition, il est recommandé de les prétraiter à haute température (par exemple entre 700 et 1100°C) pour développer en surface une micro-couche d'alumine réfractaire. Cette micro-couche superficielle, de porosité et de surface spécifique supérieure à celle du métal d'origine favorise l'accrochage de la phase active tout en protégeant le reste du support contre la corrosion.

La quantité de phase adsorbante déposée ou préparée directement sur le support (ou substrat) céramique ou métallique est généralement comprise entre 20 et 300g par litre dudit support et avantageusement entre 50 et 200g par litre.

Les matériaux selon l'invention permettent donc d'adsorber et de désorber les oxydes d'azote présents dans les gaz, en particulier les gaz d'échappement.

Ces matériaux sont caractérisés en ce qu'ils sont capable d'adsorber les NOₓ à une température généralement comprise entre 50 et 400°C et de préférence entre 100 et 350°C, et de manière plus préférée entre 150 et 250°C les dits oxyde d'azote pouvant être désorbés à une température généralement comprise entre 300 et 500°C et de manière préférée comprise entre 350 et 450°C. Ainsi la désorption selon l'invention peut avoir lieu sur d'étroites fenêtres de températures respectivement avec généralement une amplitude de 80°C. Or, pour les voitures Diesel légères, la température des gaz d'échappement est généralement comprise entre 150 et 300°C et dépasse rarement les 500°C. Les matériaux utilisés dans le procédé selon l'invention sont donc adaptés à l'adsorption des oxydes d'azote présents dans les gaz d'échappement, de moteurs stationnaires ou particulièrement de moteurs automobiles Diesel ou à allumage commandé (moteurs dits à réglage pauvre), mais également dans les gaz issus de turbine à gaz fonctionnant avec des carburants gazeux ou liquides. Ces gaz se caractérisent aussi par des teneurs en oxydes d'azote de quelques dizaines à quelques milliers de parties par million (ppm), et peuvent contenir des teneurs comparables en composés réducteurs (CO, H₂, hydrocarbures) et en soufre, ainsi que des concentrations importantes en oxygène (de 1 à près de 20% volume) et en vapeur d'eau. Le matériau selon l'invention peut être utilisé à des VVH (volume de matériau par volume de gaz par heure) du gaz d'échappement généralement comprise entre 500 et 150 000 h-1, par exemple entre 5000 et 100 000 h-1.

L'invention concerne également l'utilisation des matériaux pour l'adsorption et la désorption des oxydes d'azote dans un procédé d'élimination des oxydes d'azote, tout particulièrement dans un milieu surstoechiométrique en oxydants. Ainsi le matériau selon l'invention peut être utilisé dans un procédé comprenant :
- éventuellement une étape d'oxydation d'au moins une partie des oxydes d'azote en présence d'un matériau d'oxydation,
- une étape d'adsorption d'au moins une partie desdits oxydes d'azote sur un matériau d'adsorption tel que défini dans la présente invention,
- une étape de désorption des oxydes d'azotes
- une étape de réduction sélective d'au moins une partie des oxydes d'azote en azote moléculaire par des agents réducteurs en présence d'au moins un catalyseur de réduction des oxydes d'azotes.

Ainsi le procédé d'élimination des oxydes d'azote comprend lors de l'étape de réduction des oxydes d'azote l'utilisation d'un catalyseur actif et sélectif pour la réduction des oxydes d'azote en azote moléculaire dans un milieu surstoechométrique en oxydants, par des agents réducteurs. Les catalyseurs de réduction des oxydes d'azotes en azote ou protoxyde d'azote comprennent généralement au moins un oxyde inorganique réfractaire et peuvent comprendre au moins une des zéolithes, choisi par exemple parmi les zéolithes MFI, NU-86, NU-87, EU-1 et généralement au moins un élément choisi parmi les éléments des groupes VIB, VIIB, VIII et IB des métaux de transition. Ces catalyseurs peuvent contenir éventuellement au moins un élément choisi parmi les métaux nobles du groupe VIII, par exemple le platine, le rhodium, le ruthénium, l'iridium, le palladium et éventuellement au moins un élément choisi parmi les éléments des groupes IIA des alcalino-terreux et IIIB des terres rares. Par exemple les catalyseurs de réduction des oxydes d'azote comprennent les combinaisons suivantes : Cu-ZSM5, Fe-ZSM5, Ce-ZSM5, Pt-ZSM5.

L'oxyde inorganique réfractaire est choisi parmi les supports de type Al2O3, SiO2, ZrO2 et TiO2, de préférence l'alumine.
Les agents réducteurs sont choisis parmi CO, H2, les hydrocarbures, présents dans le carburant ou ajoutés sous forme de produits frais.

Dans le cas où le matériau d'adsorption des oxydes d'azote selon la présente invention contient au moins un élément (C) choisi parmi les métaux nobles des groupes 8,9 et 10 de la classification périodique des éléments, le procédé d'élimination des oxydes d'azote comprend une première étape d'oxydation et la réduction des oxydes d'azotes en azote ou protoxyde d'azote peut avoir lieu directement sur le matériau d'adsorption selon l'invention qui permet à la fois d'oxyder les oxyde d'azote, de piéger les oxydes d'azote, de désorber lesdits oxydes d'azote et de les réduire.

### EXEMPLES

Les exemples, 1 et 5 à 12 ci-après, illustrent l'invention sans en limiter la portée.
Les exemples 2 à 4, décrivent les matériaux utilisés en piégeage des NOx selon l'art antérieur.

A titre de comparaison, tous ces catalyseurs sont testés au laboratoire en micro unité avec un mélange de gaz synthétique.

Dans tous les exemples, la désignation de phase adsorbante déposée sur le support (ou substrat) correspond, après perte au feu, à la somme des éléments constituants le matériau décrit dans la procédure ci-dessus, à savoir : les tétraèdres de phosphate, au moins un élément (A), éventuellement au moins un élément (B), éventuellement au moins un métal précieux (C) ou des éléments constituant les piliers oxydes.

Les teneurs massiques des différents éléments constituants la phase adsorbante sont mentionnées en pourcentage dans le tableau 1. L'oxygène des phases oxydes n'est pas pris en compte dans le bilan de masse, sauf pour les phosphates.

### Exemple 1 (invention)

0.15 mol ZrOCl₂.8H₂O sont dissous dans 1 litre de HCI (3 mol/L). On y ajoute ensuite 1 litre HCI (1.7 mol/L) +H₃PO₄ (1.7 mol/L). La solution obtenue est agitée et chauffée à reflux pendant 12h, puis filtrée. Le produit récupéré est ensuite remis en solution dans 2 litres de H₃PO₄ (2.5 mol/L) et chauffé à reflux pendant 12 heures.
Après centrifugation, on lave le produit récupéré à l'eau distillée pour retirer l'excès d'acide phosphorique puis on le laisse sécher à l'air.
L'échange des protons du solide obtenu par des cations césium se fait en deux étapes. Tout d'abord on procède à un échange partiel de ces protons par des cations sodium. Pour cela, on introduit le solide obtenu dans une solution de phosphate de sodium dihydrogène (NaH₂PO₄.2H₂O) de concentration 0.5 M, puis on filtre. Le produit est ensuite lavé à l'eau distillée puis séché.
Le composé peut alors subir l'échange au césium. Cet échange s'effectue en introduisant la poudre obtenue dans une solution d'acétate de césium de concentration 0.4M. La suspension est agitée à température ambiante pendant 12 heures, puis filtrée, rincée et séchée à l'air.
Le matériau échangé et sec est déshydraté à 180°C pendant 12 heures. Avant utilisation, il sera calciné sous air à 600°C.

### Exemple 2 (comparatif)

On prépare un matériau d'occlusion des NOₓ selon la technique décrite dans le brevet JP 9075714, ayant la formulation suivante K₁₈Zn_{0.9}Sn_{6.2}O₁₆ et qui présente la structure hollandite (vérifié par diffraction des rayons X).

### Exemple 3 (comparatif)

On prépare le matériau d'occlusion des NOₓ de formule YBa₂Cu₃O₇₋ₓ selon la technique décrite dans le brevet EP 0 664 147, et qui présente la structure pérovskite (vérifié par diffraction des rayons X).

### Exemple 4 (comparatif)

On utilise un matériau de formule PtBaLa-CeO₂-Al₂O₃-TiO2 tel que décrit dans la demande de brevet EP 0 666 103 A1, pour piéger les NOx par formation de nitrates.

### Exemple 5 (invention)

On reproduit le catalyseur de l'exemple 1 à l'exception que l'étape d'échange par le césium est remplacée par un échange au potassium avec une solution d'acétate de potassium de concentration 0.4M.

### Exemple 6 (invention)

On reproduit le catalyseur de l'exemple 1 à l'exception que l'étape d'échange par le césium à température ambiante est remplacée par un échange au baryum avec une solution d'acétate de baryum de concentration 0.2M.

### Exemple 7 (invention)

0,15 mol de ZrOCl₂.8H₂O sont dissous dans 150 ml H₂O.
On dissout 415 g de NaH₂PO₄ dans 300ml d'une solution d'acide chlorhydrique (3 M). On introduit goutte à goutte le sel de zirconium dans la solution chaude d'orthophosphate de sodium. Le gel ainsi obtenu est agité et chauffé à reflux pendant 25 heures. Le gel est ensuite filtré et lavé avec une solution 0.2 M de NaH₂PO₄, puis il subit un dernier rinçage pour retirer l'excès de phosphate. Il est alors séché à l'air.
Le composé subit alors un échange au césium. Cet échange s'effectue en introduisant la poudre obtenue dans une solution d'acétate de césium de concentration 0.4M. La suspension est agitée à température ambiante pendant 12 heures, puis filtrée, rincée et séchée à l'air.

Le matériau échangé et sec est déshydraté à 180°C pendant 12 heures. Avant utilisation, il sera calciné sous air à 600°C.

### Exemple 8 (invention)

On reproduit le catalyseur de l'exemple 7 à l'exception que l'étape d'échange par le césium à température ambiante est remplacée par un échange au baryum avec une solution d'acétate de baryum de concentration 0.2M.

### Exemple 9 (invention)

0.15mol de ZrOCl₂.8H₂O sont dissous dans 1 litre de HCl (3 mol/L). On y ajoute ensuite 1 litre HCI (1.7 mol/L) +H₃PO₄ (1.7 mol/L). La solution obtenue est agitée et chauffée à reflux pendant 12h, puis filtrée. Le produit récupéré est ensuite lavé à l'eau distillée. Le composé subit alors un échange au césium. Cet échange s'effectue en introduisant la poudre obtenue dans une solution d'acétate de césium de concentration 0.4M. La suspension est agitée à température ambiante pendant 12 heures, puis filtrée, rincée et séchée à l'air. Les matériaux échangés et secs sont déshydratés en les chauffant à 180°C pendant 12 heures. Avant utilisation, ils seront calcinés sous air à 600°C.

### Exemple 10 (invention)

0 15mol de ZrOCl₂.8H₂O sont dissous dans 1 litre de HCI (3 mol/L). On y ajoute ensuite 1 litre HCI (1.7 mol/L) +H₃PO₄ (1.7 mol/L). La solution obtenue est agitée et chauffée à reflux pendant 12h, puis filtrée. On remet la totalité du produit dans 2 litres de H₃PO₄ (4.5 mol/L) que l'on chauffe à reflux pendant 5 jours. L'excès d'acide phosphorique est retiré par centrifugation et le matériau obtenu est lavé à l'eau distillée, puis il est séché à l'air.
On ajoute goutte à goutte une solution de n-propylamine (0.1 M) au lot de produit obtenu dans une proportion de 100 ml par gramme de produit. La suspension obtenue est mélangée pendant 4 heures, puis filtrée et lavée.
Le matériau est remis en solution dans un volume d'eau et on y ajoute une solution de chlorure basique d'aluminium de pH égal à 4. Le mélange est chauffé à reflux pendant 24 heures.
Le produit, filtré lavé et séché est ensuite calciné sous air à 450°C pendant 5 heures.
Le composé subit alors un échange au césium. Cet échange s'effectue en introduisant la poudre obtenue dans une solution d'acétate de césium de concentration 0.4M. La suspension est agitée à température ambiante pendant 12 heures, puis filtrée, rincée et séchée à l'air.

Le matériau échangé et sec est déshydraté à 180°C pendant 12 heures. Avant utilisation, il sera calciné sous air à 600°C.

### Exemple 11 (invention)

0.15 mol de ZrOCl₂.8H₂O sont dissous dans 1 litre de HCI (3 mol/L). On y ajoute ensuite 1 litre HCI (1.7 mol/L) +H₃PO₄ (1.7 mol/L). La solution obtenue est agitée et chauffée à reflux pendant 12h, puis filtrée. On remet la totalité du produit dans 2 litres de H₃PO₄ (4.5 mol/L) que l'on chauffe à reflux pendant 5 jours. L'excès d'acide phosphorique est retiré par centrifugation et le matériau obtenu est lavé à l'eau distillée, puis il est séché à l'air.
On introduit le matériau obtenu dans 3 litres d'une solution aqueuse contenant 10% en masse de NH₂(CH₂)₃Si(OC₂H₅)₃ ; la solution obtenue est chauffée à reflux pendant 72 heures, puis la suspension est filtrée, lavée et séchée. La poudre obtenue est déshydratée à 180°C pendant 12 heures, puis calcinée sous air à 450°C pendant 5 heures.
Le composé subit alors un échange au césium. Cet échange s'effectue en introduisant la poudre obtenue dans une solution d'acétate de césium de concentration 0.4M. La suspension est agitée à température ambiante pendant 12 heures, puis filtrée, rincée et séchée à l'air.
Le matériau échangé et sec est déshydraté à 180°C pendant 12 heures. Avant utilisation, il sera calciné sous air à 600°C.

### Exemple 12 (invention)

On mélange 50 grammes de solution de TiCl₄ à 1 litre HCI (2 mol/L) et à 1 litre de H₃PO₄ (2 mol/L). On chauffe l'ensemble à reflux pendant 12 heures, puis on le filtre. Le produit récupéré est ensuite lavé avec une solution de H₃PO₄.
On chauffe ensuite le produit à reflux dans une solution de H₃PO₄ (3 mol/L) pendant 12 heures. Le produit est ensuite filtré puis introduit dans une solution de phosphate de sodium dihydrogène (NaH₂PO₄.2H₂O) de concentration 0.5 M. On filtre. Le produit est ensuite lavé à l'eau distillée puis séché.
Le composé peut alors subir l'échange au césium. Cet échange s'effectue en introduisant la poudre obtenue dans une solution d'acétate de césium de concentration 0.4M. La suspension est agitée à température ambiante pendant 12 heures, puis filtrée, rincée et séchée à l'air.
Le matériau échangé et sec est déshydraté à 180°C pendant 12 heures. Avant utilisation, il sera calciné sous air à 600°C.

**Tableau I : Compostion massique des matériaux préparés selon les exemples 1 à 12**

| Exemples | Matériaux | K | Cs | Ba | La | Ce | Y | Cu | Zn | Zr | Sn | Ti | Al | Si | PO₄ | Pt |
|---|---|---|---|---|---|---|---|---|---|---|---|---|---|---|---|---|
| Exemple 1 (inv.) | Cs-ZrP | | 29.3 | | | | | | | 17.6 | | | | | 53.1 | |
| Exemple 2 (comp.) | Hollandite K-Sn-Zn | 11.2 | | | | | | | 9.4 | | 58.9 | | | | | |
| Exemple 3 (comp.) | YBaCuO | | | 41.7 | | | 13.5 | 29.0 | | | | | | | | |
| Exemple 4 (comp.) | PtBaLa-CeO₂-Al₂O₃-TiO₂ | | | 18 | 3 | 11 | | | | | | 8.5 | 18.1 | | | 0.5 |
| Exemple 5 (inv.) | K-ZrP | 13.6 | | | | | | | | 21,2 | | | | | 65.2 | |
| Exemple 6 (inv.) | Ba-ZrP | | | 32.6 | | | | | | 18.9 | | | | | 48.5 | |
| Exemple 7 (inv.) | Cs-ZrP | | 24,7 | | | | | | | 17,4 | | | | | 57,9 | |
| Exemple 8 (inv.) | Ba-ZrP | | | 31.8 | | | | | | 18.5 | | | | | 49.7 | |
| Exemple 9 (inv.) | Cs-ZrP | | 28.6 | | | | | | | 19.8 | | | | | 51.6 | |
| Exemple 10 (inv.) | Cs-ZrP ponté Al₂O₃ | | 25.8 | | | | | | | 16.1 | | | 14.3 | | 33.5 | |
| Exemple 11 (inv.) | Cs-ZrP ponté SiO₂ | | 21.1 | | | | | | | 14.5 | | | | *16.0* | *30.1* | |
| Exemple 12 (inv.) | Cs-TiP | | *40.1* | | | | | | | | | 12.1 | | | 47.8 | |

### Exemple 13 : Résultats des tests d'adsorption-désorption

Les matériaux testés sont installés dans un micro-réacteur placé au centre d'un four. Ils subissent un prétraitement à 600°C pendant 5 heures sous un mélange gazeux constitué d'azote contenant 10% O₂ et 2% H₂O. Sous le même mélange, ces matériaux sont amenés à la température de 200°C, où ils sont alors traversés pendant 20 minutes par un mélange gazeux contenant des oxydes d'azote.

| | | |
|---|---|---|
| **vitesse spatiale horaire (VVH)** | : 5000h⁻¹ | |
| **composition du mélange:** | | |
| | NOx : | 800ppm |
| | O₂ : | 10% |
| | H₂O : | 2% |
| | N₂ : | complément à 100% |

Après les vingt minutes d'adsorption, l'alimentation en oxydes d'azote est coupée, et les matériaux subissent un chauffage pour désorber les NOx:

| | | |
|---|---|---|
| **vitesse spatiale horaire (VVH)** | : 5000h⁻¹ | |
| **composition du mélange:** | | |
| | O₂ : | 10% |
| | H₂O : | 2% |
| | N₂ : | complément à 100% |
| **fenêtre de température de désorption** : | | 200 à 600°C |
| **rampe de température** : | | 10°C/min |

Dans le tableau II ci-dessous sont rassemblés les valeurs indiquant la quantité d'oxydes d'azote adsorbés ainsi que les températures de désorption de ces oxydes. A l'exception du matériau de l'exemple 4 qui contient déjà du platine dans sa composition, les résultats affichés dans les colonnes " avec platine ", sont ceux des matériaux concernés auxquels a été mélangée une phase Pt/SiO₂ équivalent à un pourcentage massique de 1% par rapport à la masse totale du mélange. Il a été vérifié que, dans nos conditions, cette phase Pt/SiO₂ ne joue pas le rôle de masse adsorbante des oxydes d'azote.

**Tableau II : Résultats des tests d'adsorption-désorption en micro - unité**

| **Exemple** | **Matériaux** | **surface spécifique** | sans Pt | | avec Pt | |
|---|---|---|---|---|---|---|
| | | | | | | |
| | | (m²/g) | **Capacité** à 200°C (mgNO/g) | **T_{dés}** (°C) | **Capacité à** 200°C (mgNO/g) | **T_{dés}** (°C) |
| 1 (inv.) | Cs-ZrP | 12 | 0.4 | 420 | 1.5 | 360 |
| 2 (comp) | Hollandite K-Sn-Zn | 4 | 0.09 | 425 | | |
| 3 (comp) | YbaCuO | 3.5 | 1.1 | 490 | | |
| 4 (comp) | Pt-Ba-Ce-La/TiO₂-Al₂O₃ | 120 | | | 6.1 | 570 |
| 5 (inv.) | K-ZrP | 16 | 0,4 | 405 | 1.1 | 300 |
| 6 (inv.) | Ba-ZrP | 12 | 0.15 | 390 | 0.4 | 220 |
| 7 (inv.) | Cs-ZrP | 25 | 0.4 | 390 | 2.2 | 300 |
| 8 (inv.) | Ba-ZrP | 25 | 0.13 | 345 | 0.4 | 250 |
| 9 (inv.) | Cs-ZrP | 6 | 0.3 | 405 | 0,7 | 300 |
| 10 (inv.) | Cs-ZrP ponté Al₂O₃ | 125 | *3.1* | *415* | *12.7* | *350* |
| 11 (inv.) | Cs-ZrP ponté SiO₂ | 225 | 4.3 | 395 | 18.3 | 320 |
| 12 (inv.) | Cs-TiP | 8 | 0,3 | 410 | 1.2 | 365 |

On constate que les phosphates revendiqués par la demanderesse particulièrement quand ceux ci contiennent des éléments alcalins sont efficaces dans l'adsorption des oxydes d'azote. La capacité d'adsorption peut être avantageusement améliorée par augmentation de la surface spécifique en introduisant des piliers oxydes dans la structure en feuillets des matériaux revendiqués. La présence d'une phase oxydante est elle aussi bénéfique et permet d'augmenter la quantité de NOₓ piégés dans les matériaux revendiqués.

### Exemple 14 : Extrapolation à grande vitesse spatiale horaire et à mélange gazeux complexe

Les matériaux testés sont installés dans un réacteur placé au centre d'un four. Ils subissent un prétraitement à 600°C pendant 5 heures sous un mélange gazeux constitué d'azote contenant 18.5% O₂ , 5% CO₂, 4% H₂O et 500 ppmC de C₂H₄. Sous le même mélange, ces matériaux sont amenés à la température de 200°C, où ils sont alors traversés pendant 20 minutes par un mélange gazeux contenant des oxydes d'azote.

| | | |
|---|---|---|
| **vitesse spatiale horaire (VVH)** : | | 50 000 h-¹ |
| **composition du mélange:** | | |
| | NOₓ : | 800 ppm |
| | O₂ : | 18.5% |
| | H₂O : | 4% |
| | CO₂ : | 5% |
| | C₂H₄ : | 500 ppmC |
| | N₂ : | complément à 100% |

Après les vingt minutes d'adsorption, l'alimentation en oxydes d'azote est coupée, et les matériaux subissent un chauffage pour désorber les NOx:

| | | |
|---|---|---|
| **vitesse spatiale horaire (VVH)** | : 50 000 h⁻¹ | |
| **composition du mélange:** | | |
| | O₂ : | 18.5% |
| | H₂O : | 4% |
| | CO₂ : | 5% |
| | C₂H₄ : | 500 ppmC |
| | N₂ : | complément à 100% |
| **fenêtre de température de désorption** : | | 200 à 600°C |
| **rampe de température :** | | 10°C/min |

Dans le tableau III ci-dessous, sont rassemblées pour le matériau de l'exemple 1 les valeurs indiquant la quantité d'oxydes d'azote adsorbés ainsi que les températures de désorption de ces oxydes ; elles sont comparées aux résultats obtenus dans les conditions précédentes pour le même matériau.

On constate que les phosphates revendiqués par la demanderesse montrent une efficacité comparable en adsorption des oxydes d'azote, que la VVH soit égale à 5000 ou à 50000 h⁻¹. De plus, si le mélange est rendu plus complexe par ajout d'autres molécules gazeuses (CO₂, C₂H₄) classiquement contenues dans des gaz d'échappements et dont la taille pourrait permettre qu'elles s'adsorbent dans les espaces interfeuillets des matériaux, on s'aperçoit que la capacité d'adsorption n'est abaissée que de 30% environ.
De tels résultats suggèrent que les matériaux revendiqués par la demanderesse peuvent être utilisés pour le piégeage des oxydes d'azote contenus dans des gaz d'échappement, présentant de fortes VVH et des molécules gazeuses autres que les NOₓ.

Les températures de désorption des oxydes d'azote piégés dans le matériau ne sont pas significativement modifiées ni par l'augmentation de la VVH ni par la présence d'autres molécules adsorbées sur le matériau.

**Tableau III : Résultats des tests d'adsorption**

| **Exemple** | **Matériaux** | **VVH (h⁻¹)** | **Composition du mélange lors du prétraitment** | **Composition du mélange lors de l'adsorption** | **Capacité à 200°C (mgNO/g)** | **T_{dés} (°C)** |
|---|---|---|---|---|---|---|
| 1 (inv.) | Cs-ZrP + Pt | 5 000 | O₂, H₂O, N₂ | NO, O₂, H₂O, N₂ | 1.5 | 360 |
| 1 (inv.) | Cs-ZrP + Pt | 50 000 | O₂, H₂O, N₂ | NO, O₂, H₂O, N₂ | 1.3 | 345 |
| 1 (inv.) | Cs-ZrP + Pt | 50 000 | O₂, CO₂, H₂O, C₂H₄, N₂ | NO, O₂, CO₂, H₂O, C₂H₄, N₂ | 0.9 | 340 |

### Exemple 15 : Evaluation de l'empoisonnement par les molécules soufrées

Les matériaux testés sont installés dans un micro-réacteur placé au centre d'un four. Ils subissent un prétraitement à 600°C pendant 5 heures sous un mélange gazeux constitué d'azote contenant 10% O₂ et 2% H₂O. Sous le même mélange, ces matériaux sont amenés à la température de 200°C, où ils sont alors traversés pendant 20 minutes par un mélange gazeux contenant des oxydes d'azote et du dioxyde de soufre.

| | | |
|---|---|---|
| **vitesse spatiale horaire (VVH)** | : 5 000 h⁻¹ | |
| **composition du mélange:** | | |
| | NOₓ : | 800 ppm |
| | SO₂ : | 50 ppm |
| | O₂ : | 10% |
| | H₂O : | 2% |
| | N₂ : | complément à 100% |

Après les vingt minutes d'adsorption, l'alimentation en oxydes d'azote et de soufre est coupée, et les matériaux subissent un chauffage pour désorber les NOₓ :

| | | |
|---|---|---|
| **vitesse spatiale horaire (VVH)** | : 5 000 h⁻¹ | |
| **composition du mélange:** | | |
| | O₂ : | 10% |
| | H₂O : | 2% |
| | N₂ : | complément à 100% |
| fenêtre de température de désorption : | | 200 à 600°C |
| rampe de température : | | 10°C/min |

Ils subissent alors une seconde série d'adsorption et de désorption.

Dans le tableau IV ci-dessous, sont rassemblées pour les matériaux de l'exemple 1 et de l'exemple 4 les valeurs indiquant la quantité d'oxydes d'azote adsorbés ainsi que les températures de désorption de ces oxydes, en présence ou non de dioxyde de soufre.

**Tableau IV : Evaluation de la sensibilité au soufre**

| | | | | 1 ^{ère} adsorption | | 2^{nde} adsorption | |
|---|---|---|---|---|---|---|---|
| **Exemples** | **Matériaux** | **VVH** (h⁻¹) | | **Capacité** à 200°C (mgNO/g) | **T_{dés}** (°C) | **Capacité à** 200°C (mgNO/g) | **T_{dés}** (°C) |
| 1 (inv.) | Cs-ZrP avec Pt | 5000 | sans SO₂ | 1.5 | 360 | 1,5 | 360 |
| 1 (inv.) | Cs-ZrP avec Pt | 5000 | avec SO₂ | 1.2 | 355 | 1.2 | 355 |
| 11 (inv) | Cs-ZrP ponté SiO₂ | 5000 | sans SO₂ | 18,3 | 320 | 18,3 | 320 |
| 11 (inv) | Cs-ZrP ponté SiO₂ | 5000 | avec SO₂ | 14,6 | 315 | 14,6 | 315 |
| 4 (comp.) | Pt-BaLaCe/Al₂O₃-TiO₂ | 5000 | sans SO₂ | 6.1 | 570 | 5,7 | 570 |
| 4 (comp.) | Pt-BaLace/Al₂O₃-TiO₂ | 5000 | avec SO₂ | 4.1 | 560 | 3,0 | 560 |

La capacité d'adsorption des oxydes d'azote des matériaux des exemples 1 et 11 n'est abaissée que de 20 % en présence d'oxyde de soufre contre 33 % pour le matériau de l'exemple 4 selon l'art antérieur.
Les températures de désorption des oxydes d'azote qui ont été piégés sont sensiblement égales aux températures obtenues lors des expériences sans soufre.
Cependant, les matériaux des l'exemples 1 et 11 retrouvent la totalité de leur capacité d'adsorption initiale après une désorption thermique à 600°C (la capacité lors de l'adsorption 2 est égale à la capacité de la première adsorption), ce qui n'est pas le cas pour le composé de l'exemple 4. Les pièges à NOₓ revendiqués par la demanderesse présentent donc le gros avantage de pouvoir se régénérer facilement après avoir été en contact avec des oxydes de soufre alors que les matériaux fonctionnant en piégeage des NOₓ par formation de nitrates (exemple 4) sont empoisonnés par des espèces sulfates qui sont extrêmement stables thermiquement.

## Revendications

1. Procédé pour l'adsorption et la désorption d'oxydes d'azote dans des gaz d'échappement, en particulier de moteurs à combustion interne de véhicules automobiles, en présence d'un matériau ayant une structure lamellaire et comprenant des tétraèdres de phosphate, au moins un élément (A) choisi parmi les éléments des groupes IVB, VB, VIB, VIIB et IVA de la classification périodique des éléments et au moins un élément (B) choisi dans le groupe constitué par les éléments alcalins, alcalino-terreux, les terres rares, les métaux de transition, les éléments des groupes IIIA, IVA de la classification périodique des éléments, ledit élément A étant intégré dans les sites octaédriques ménagés par la charpente phosphatée constituant les feuillets et ledit élément B se situant dans l'espace inter-feuillet dudit matériau lamellaire.

2. Procédé selon la revendication 1 dans lequel l'élément (A) dudit matériau à structure lamellaire est au degré d'oxydation +4.

3. Procédé selon l'une des revendications 1 à 2, **caractérisé en ce que** ledit élément (A) est choisi parmi le zirconium, le titane, le germanium, l'étain.

4. Procédé selon l'une des revendications 1 à 3, **caractérisé en ce que** ledit élément (B) est le césium.

5. Procédé selon l'une des revendications 1 à 4 **caractérisé en ce que** ledit matériau comprend en outre au moins un métal (C) choisi parmi les métaux nobles du groupe VIII de la classification périodique des éléments.

6. Procédé selon la revendication 5, **caractérisé en ce que** ledit élément (C) est le platine.

7. Procédé selon l'une des revendications 1 à 6, dans lequel la composition en poids dudit matériau comprend en pourcentage massique :
- 20 à 80 % de phosphate, exprimé en PO₄,
- 5 à 40 % d'au moins un élément (A),
- 1 à 55 % d'au moins un élément (B),
- éventuellement 0,05 à 5 % d'au moins un métal (C).

8. Procédé selon l'une des revendications 1 à 7, **caractérisé en ce que** ledit matériau comprend des piliers dans la structure lamellaire.

9. Procédé selon la revendication 8, **caractérisé en ce que** lesdits piliers formés dans l'espace interlamellaire comprennent au moins un oxyde ou une solution solide d'au moins un oxyde d'au moins un élément choisi dans le groupe constitué par les éléments des groupes IIIA, IVA et les métaux de transition.

10. Procédé selon la revendication 8 ou 9 **caractérisé en ce que** ledit matériau présente une surface spécifique comprise entre 30 et 500 m² g⁻¹

11. Procédé selon l'une des revendications 1 à 10, **caractérisé en ce que** ledit matériau comprend au moins un support poreux.

12. Procédé selon la revendication 11, **caractérisé en ce que** le support poreux est choisi parmi les composés suivants : SiO₂, Al₂O₃, TiO₂, ZrO₂, SiC, MgO, alumino-silicate.

13. Procédé selon l'une des revendications 1 à 12 **caractérisé en ce que** ledit matériau comprend au moins un support rigide.

14. Procédé selon l'une des revendications 1 à 13 **caractérisé en ce que** l'adsorption des oxydes d'azote est effectuée à une température comprise entre 50 et 400°C.

15. Procédé selon l'une des revendications 1 à 14 **caractérisé en ce que** la désorption des oxydes d'azote est effectuée à une température comprise entre 300 et 500°C.

16. Procédé selon la revendication 14 ou la revendication 15 comprenant une étape de réduction sélective des oxydes d'azote en azote moléculaire et/ou en protoxyde d'azote.

17. Procédé selon la revendication 16 tel que la réduction des oxydes d'azote a lieu en présence d'un catalyseur comprenant au moins un oxyde inorganique réfractaire, éventuellement au moins une zéolithe, au moins un élément choisi parmi les éléments des groupes VIB, VIIB, VIII et IB des métaux de transition, éventuellement au moins un élément choisi parmi les métaux nobles du groupe VIII, et éventuellement au moins un élément choisi parmi les éléments des groupes IIA des alcalino-terreux et IIIB des terres rares.

18. Procédé selon la revendication 1 **caractérisé en ce que** le moteur est un moteur de type Diesel.

## Claims

1. A process for adsorbing and desorbing oxides of nitrogen in exhaust gases, in particular from internal combustion engines of automotive vehicles, in the presence of a material with a lamellar structure and comprising phosphate tetrahedra, at least one element (A) selected from elements from groups IVB, VB, VIB, VIIB and IVA of the periodic table and at least one element (B) selected from the group formed by alkalis, alkaline-earths, rare earths and transition metals and elements from groups IIIA and IVA of the periodic table, said element A being integrated into the octahedral sites arranged in the phosphate framework constituting the lamellae and said element B being located in the space between the lamellae of said lamellar material.

2. A process according to claim 1, in which element (A) of said material with a lamellar structure has an oxidation number of +4.

3. A process according to claim 1 or claim 2, **characterized in that** said element (A) is selected from zirconium, titanium, germanium and tin.

4. A process according to any one of claims 1 to 3, **characterized in that** said element (B) is caesium.

5. A process according to any one of claims 1 to 4, **characterized in that** said material further comprises at least one metal (C) selected from noble metals from group VIII of the periodic table.

6. A process according to claim 5, **characterized in that** said element (C) is platinum.

7. A process according to any one of claims 1 to 6, in which the composition by weight of said material comprises, as a percentage by weight:
• 20% to 80% of phosphate, expressed as PO₄;
• 5% to 40% of at least one element (A);
• optionally, 1% to 55% of at least one element (B);
• optionally, 0.05% to 5% of at least one metal (C).

8. A process according to any one of claims 1 to 7, **characterized in that** said material comprises pillars in the lamellar structure.

9. A process according to claim 8, **characterized in that** said pillars formed in the interlamellar space comprise at least one oxide or a solid solution of at least one oxide of at least one element selected from the group formed by elements from groups IIIA and IVA and the transition metals.

10. A process according to claim 8 or claim 9, **characterized in that** said material has a specific surface area in the range 30 to 500 m²/g.

11. A process according to any one of claims 1 to 10, **characterized in that** said material comprises at least one porous support.

12. A process according to claim 11, **characterized in that** the porous support is selected from the following compounds: SiO₂, Al₂O₃, TiO₂, ZrO₂, SiC, MgO and alumino-silicate.

13. A process according to any one of claims 1 to 12, **characterized in that** said material comprises at least one rigid support.

14. A process according to any one of claims 1 to 13, **characterized in that** adsorption of the oxides of nitrogen is carried out at a temperature in the range 50°C to 400°C.

15. A process according to any one of claims 1 to 14, **characterized in that** desorption of the oxides of nitrogen is carried out at a temperature in the range 300°C to 500°C.

16. A process according to claim 14 or claim 15, comprising a step for selective reduction of oxides of nitrogen to molecular nitrogen and/or nitric oxide.

17. A process according to claim 16, in which reduction of the oxides of nitrogen takes place in the presence of a catalyst comprising at least one inorganic refractory oxide, optionally at least one zeolite, at least one element selected from elements from groups VIB, VIIB, VIII and the transition metal group IB, optionally at least one element selected from the noble metals of group VIII, and optionally at least one element selected from elements from the alkaline-earths group IIA and the rare earths IIB.

18. A process according to claim 1, **characterized in that** the engine is a diesel type engine.

## Patentansprüche

1. Verfahren zur Adsorption und Desorption von Stickoxiden in Abgasen, insbesondere von Kraftfahrzeugverbrennungsmotoren, in Gegenwart eines Materials, das eine lamellare Struktur aufweist und Phosphattetraeder und mindestens ein Element (A) umfasst, ausgewählt aus den Elementen der Gruppen IVB, VB, VIB, VIIB und IVA des Periodensystems der Elemente und mindestens ein Element (B), ausgewählt aus der Gruppe, die aus den alkalischen, erdalkalischen Elementen, den Seltenerden, den Übergangsmetallen, den Elementen der Gruppen IIIA, IVA des Periodensystems der Elemente gebildet wird, wobei das Element A in die Oktaederzentren eingebaut ist, die durch das Phosphatgerüst angelegt werden, das die Schichten bildet, und wobei das Element B im Raum zwischen den Schichten des lamellaren Materials liegt.

2. Verfahren nach Anspruch 1, wobei das Element (A) des Materials mit lamellarer Struktur eine Oxidationszahl von +4 aufweist.

3. Verfahren nach einem der Ansprüche 1 bis 2, **dadurch gekennzeichnet, dass** das Element (A) ausgewählt wird aus Zirconium, Titan, Germanium, Zinn.

4. Verfahren nach einem der Ansprüche 1 bis 3, **dadurch gekennzeichnet, dass** das Element (B) Cäsium ist.

5. Verfahren nach einem der Ansprüche 1 bis 4, **dadurch gekennzeichnet, dass** das Material ferner mindestens ein Metall (C) umfasst, ausgewählt aus den Edelmetallen der Gruppe VIII des Periodensystems der Elemente.

6. Verfahren nach Anspruch 5, **dadurch gekennzeichnet, dass** das Element (C) Platin ist.

7. Verfahren nach einem der Ansprüche 1 bis 6, wobei die Gewichtszusammensetzung des Materials in Masseprozent umfasst:
- 20 bis 80 % Phosphat, ausgedrückt als PO₄,
- 5 bis 40 % mindestens eines Elements (A),
- 1 bis 55 % mindestens eines Elements (B),
- gegebenenfalls 0,05 bis 5 % mindestens eines Metalls (C).

8. Verfahren nach einem der Ansprüche 1 bis 7, **dadurch gekennzeichnet, dass** das Material Säulen in der lamellaren Struktur umfasst.

9. Verfahren nach Anspruch 8, **dadurch gekennzeichnet, dass** die Säulen, die im interlamellaren Raum gebildet werden, mindestens ein Oxid oder eine feste Lösung aus mindestens einem Oxid mindestens eines Elements umfassen, ausgewählt aus der Gruppe, die aus den Elementen der Gruppen IIIA, IVA und der Übergangsmetalle besteht.

10. Verfahren nach Anspruch 8 oder 9, **dadurch gekennzeichnet, dass** das Material eine spezifische Oberfläche im Bereich zwischen 30 und 500 m² g-¹ aufweist.

11. Verfahren nach einem der Ansprüche 1 bis 10, **dadurch gekennzeichnet, dass** das Material mindestens einen porösen Träger umfasst.

12. Verfahren nach Anspruch 11, **dadurch gekennzeichnet, dass** der poröse Träger aus den folgenden Verbindungen ausgewählt ist: SiO₂, Al₂O₃, TiO₂, ZrO₂, SiC, MgO, Alumosilicat.

13. Verfahren nach einem der Ansprüche 1 bis 12, **dadurch gekennzeichnet, dass** das Material mindestens einen starren Träger umfasst.

14. Verfahren nach einem der Ansprüche 1 bis 13, **dadurch gekennzeichnet, dass** die Adsorption der Stickoxide bei einer Temperatur im Bereich zwischen 50 und 400 °C durchgeführt wird.

15. Verfahren nach einem der Ansprüche 1 bis 14, **dadurch gekennzeichnet, dass** die Desorption der Stickoxide bei einer Temperatur im Bereich zwischen 300 und 500 °C durchgeführt wird.

16. Verfahren nach Anspruch 14 oder Anspruch 15, das einen Schritt der selektiven Reduktion der Stickoxide in molekularen Stickstoff und/oder Distickstoffmonoxid umfasst.

17. Verfahren nach Anspruch 16, bei dem die Reduktion der Stickoxide in Gegenwart eines Katalysators stattfindet, der mindestens ein anorganisches refraktäres Oxid, gegebenenfalls mindestens einen Zeolithen, mindestens ein Element, ausgewählt aus den Elementen der Gruppen VIB, VIIB, VIII und IB der Übergangsmetalle, gegebenenfalls mindestens ein Element, ausgewählt aus den Edelmetallen der Gruppe VIII, und gegebenenfalls mindestens ein Element, ausgewählt aus den Elementen der Gruppen IIA der Erdmetalle und IIIB der Seltenerden, umfasst.

18. Verfahren nach Anspruch 1, **dadurch gekennzeichnet, dass** der Motor ein Dieselmotor ist.
